# EUROPEAN PATENT APPLICATION

(11) **EP 4 328 104 A1**
(43) Date of publication of application: **28.02.2024**
(21) Application number: 22791926.3
(22) Date of filing: 04.04.2022
(51) Int. Cl.: B60W 30/08, B60W 50/14, B60W 40/02, B60K 35/00, B60W 50/00

(54) **ELECTRONIC DEVICE MOUNTED ON VEHICLE AND OPERATION METHOD THEREFOR**

(30) Priority: 21.04.2021 KR 20210051826
(71) Applicant: Samsung Electronics Co., Ltd., Suwon-si, Gyeonggi-do 16677 (KR)
(72) Inventor: SONG, Minwoo, Suwon-si, Gyeonggi-do 16677 (KR); YOON, Kyungjin, Suwon-si, Gyeonggi-do 16677 (KR); LEE, Chulmin, Suwon-si, Gyeonggi-do 16677 (KR); CHO, Jaeseung, Suwon-si, Gyeonggi-do 16677 (KR)
(74) Representative: Gulde & Partner
(86) International application number: PCT/KR2022/004801
(87) International publication number: WO 2022/225226

(57) **Abstract**

The disclosure provides an electronic device and method of operating the same to prevent accidents by figuring out a movement path of another vehicle or moving object located or moving in a vicinity of a vehicle in advance. An electronic device according to an embodiment of the disclosure obtains movement information of at least one surrounding moving object in a vicinity of a vehicle, predicts a movement path of the at least one surrounding moving object based on the movement information obtained, determine a safety way of the vehicle based on the movement path of the at least one surrounding moving object and at least one of a departure point, a destination and a stopover of the vehicle, predicts an expected collision point due to a surrounding moving object located on or approaching the safety way, and displays a user interface (UI) representing the safety way and the expected collision point.

## Description

### Technical Field

The disclosure relates to an electronic device mounted on a vehicle and a method of operating the same. Specifically, the disclosure relates to an electronic device and a method of operating the same to determine a safety way of a vehicle, based on movement information of a surrounding moving object located or moving around the vehicle, and predict an expected collision point.

### BACKGROUND ART

Accidents that occur during driving of vehicles often happen when boundaries of roads are unclear or the purposes of the roads are uncertain (e.g., the road is interchangeably used with a sidewalk, or used as a road on weekdays or as a vehicle-free road on weekends). Furthermore, accidents from traffic signal violation or sudden intrusion of not only the vehicle but also other types of transportation, e.g., motor bikes, electric kickboards, electric bicycles, etc., into the road have happened frequently these days.

With the technological advancement of electronic devices, a technology to prevent the accidents by recognizing another vehicle or a moving object approaching the vehicle by using a camera, radar sensor, light detection and radar (LIDAR) sensor or other proximity sensor attached to the vehicle is prevalent and widely used even today. However, the technology currently used has a technological limit in that it may only recognize another vehicle or a moving object approaching the vehicle to a certain extent, and is unable to prevent an accident with a vehicle or moving object in a blind area, which may not be identified by the camera, radar sensor, or LIDAR sensor. Furthermore, it may not foresee a movement path of the surrounding vehicle or surrounding moving object, so the drivers have no choice but look around in person and drive safely even with the camera or various sensors.

Such accidents may be prevented during the driving of the vehicle when the movement path of another surrounding vehicle or surrounding moving object is known in advance.

### Disclosure

### Technical Problem

The purpose of the disclosure is to provide an electronic device and method of operating the same to prevent accidents by figuring out a movement path of another vehicle or moving object located or moving around a vehicle in advance. An embodiment of the disclosure provides an electronic device and method for operating the same to determine a safety way of a vehicle equipped with the electronic device based on movement information of a surrounding moving object located or moving around the vehicle, predict a movement path of the surrounding moving object, and predict an expected collision point based on the safety way of the vehicle and the movement path of the surrounding moving object.

### Technical Solution

To solve the technological problem, an embodiment of the disclosure provides an electronic device including a display, a communication interface configured to perform data communication with a server or at least one surrounding moving object located or moving around a vehicle, a memory configured to store at least one program, and a processor configured to execute the at least one program, wherein the processor is configured to control the communication interface to obtain movement information including at least one of a departure point, a destination, a stopover, a current location, a moving speed, a vehicle type and driving profile data of the at least one surrounding moving object, predict a movement path of the at least one surrounding moving object based on the movement information obtained, determine a safety way of the vehicle based on the movement path of the at least one surrounding moving object and at least one of a departure point, a destination and a stopover of the vehicle, predict an expected collision point due to a surrounding moving object located on or approaching the safety way based on the movement path of the at least one surrounding moving object and the safety way of the vehicle, and display a user interface (Ul) representing the safety way and the expected collision point on the display.

In an embodiment, the processor may control the communication interface to receive a data packet including the movement information from the at least one moving object located in a local block within a preset range centered on a location of the vehicle.

In an embodiment, the processor may receive, through the communication interface from a first surrounding moving object located in the local block, a list of surrounding moving objects included in a neighboring local block determined to be an area of a preset range centered on the first surrounding moving object, identify at least one second surrounding moving object not included in the local block by comparing the received list with at least one moving object included in the local block, and obtain movement information about the identified at least one second surrounding moving object.

In an embodiment, the driving profile data may include movement pattern information about at least one of a path miss rate, a path compliance rate, an average moving speed, and a number of re-routing times of a driver who drives the at least one surrounding moving object.

In an embodiment, the processor may display a safety circle UI on the display, which represents the at least one surrounding moving object in the shape of a circle having a diameter proportional to at least one value of the path miss rate, the average moving speed and the number of re-routing times and inversely proportional to the path compliance rate.

In an embodiment, the processor may control the display to output a warning notification UI when a surrounding moving object approaching the expected collision point is recognized or a movement path of the at least one surrounding moving object overlaps the safety way of the vehicle.

In an embodiment, the processor may recognize a surrounding moving object having at least one of the path miss rate, the path compliance rate, the average moving speed and the number of re-routing times exceeding a preset threshold among the at least one surrounding moving object, determine the recognized surrounding moving object as a dangerous object, and control intervals and a number of times of outputting the warning notification when the dangerous object approaches the expected collision point or is located on the safety way of the vehicle.

In an embodiment, the processor may control the display to display each section of the safety way in different color based on a degree of risk determined according to at least one of a location of at least one surrounding moving object on the safety way, whether to pass through a stopover, moving speed and an expected collision point.

In an embodiment, the processor may display an alternative path avoiding and detouring around the expected collision point on the display when a collision is expected as the at least one surrounding moving object approaches the vehicle or the vehicle drives to the expected collision point.

In an embodiment, the electronic device may further include a controller area network (CAN) communication module configured to transmit or receive a control signal to or from a power system and a brake system of the vehicle, and the processor may transmit an emergent brake control signal to stop driving of the vehicle to a driving system of the vehicle through the CAN communication module when a collision with the at least one surrounding moving object is expected.

To solve the technological objective, an embodiment of the disclosure provides a method of operating an electronic device mounted on a vehicle. The method includes obtaining movement information including at least one of a departure point, a destination, a stopover, a current location, a moving speed, a vehicle type and driving profile data of at least one surrounding moving object around the vehicle, predicting a movement path of the at least one surrounding moving object based on the movement information obtained, determining a safety way of the vehicle based on the movement path of the at least one surrounding moving object and at least one of a departure point, a destination and a stopover of the vehicle, predicting an expected collision point due to a surrounding moving object located on or approaching the safety way based on the movement path of the at least one surrounding moving object and the safety way of the vehicle, and displaying a UI representing the safety way and the expected collision point.

In an embodiment, the obtaining of the movement information of the at least one moving object may include receiving a data packet including the movement information from the at least one moving object located in a local block within a preset range centered on a location of the vehicle.

In an embodiment, the obtaining of the movement information of the at least one moving object may include receiving a list of surrounding moving objects included in a neighboring local block determined to be an area of a preset range centered on a first surrounding moving object located in the local block from the first surrounding moving object, identifying at least one second surrounding moving object not included in the local block by comparing the received list with at least one moving object included in the local block, and obtaining movement information about the identified at least one second surrounding moving object.

In an embodiment, the driving profile data may include movement pattern information about at least one of a path miss rate, a path compliance rate, an average moving speed, and a number of re-routing times of a driver who drives the at least one surrounding moving object.

In an embodiment, the displaying of the UI may include displaying a safety circle Ul, which represents the at least one surrounding moving object in the shape of a circle having a diameter proportional to at least one value of the path miss rate, the average moving speed and the number of re-routing times and inversely proportional to the path compliance rate.

In an embodiment, the method may further include outputting a warning notification when a surrounding moving object approaching the expected collision point is recognized or a movement path of the at least one surrounding moving object overlaps the safety way of the vehicle.

In an embodiment, the method may further include recognizing a surrounding moving object having at least one of the path miss rate, the path compliance rate, the average moving speed and the number of re-routing times exceeding a preset threshold among the at least one surrounding moving object, and determining the recognized surrounding moving object as a dangerous object, and the outputting of the warning notification may control intervals and a number of times of outputting the warning notification when the dangerous object approaches the expected collision point or is located on the safety way of the vehicle.

In an embodiment, the displaying of the UI may include displaying each section of the safety way in different color based on a degree of risk determined according to at least one of a location of at least one surrounding moving object on the safety way, whether to pass through a stopover, moving speed and an expected collision point.

In an embodiment, the method may further include displaying an alternative path avoiding and detouring around the expected collision point when a collision is expected as the at least one surrounding moving object approaches the vehicle or the vehicle drives to the expected collision point.

To solve the technological problem, another embodiment of the disclosure provides a computer program product including a computer-readable storage medium having a program recorded thereon to be executed on a computer.

### Description of Drawings

FIG. 1 is a conceptual diagram for describing a method of operating an electronic device, according to an embodiment of the disclosure.
FIG. 2 is a block diagram illustrating components of an electronic device, according to an embodiment of the disclosure.
FIG. 3 is a flowchart illustrating a method of operating an electronic device, according to an embodiment of the disclosure.
FIG. 4A illustrates an example of a data packet including movement information of a surrounding moving object received by an electronic device of the disclosure.
FIG. 4B illustrates an example of a data packet including movement information of a surrounding moving object received by an electronic device of the disclosure.
FIG. 5A is a diagram of expanding a local block of an electronic device to a neighboring local block (or neighbor local block) of a surrounding moving object, according to an embodiment of the disclosure.
FIG. 5B is a diagram for describing obtaining movement information of a moving object in a neighboring local block by expanding a local block of an electronic device, according to an embodiment of the disclosure.
FIG. 6 illustrates an example of a data packet transmitted by an electronic device to obtain movement information of a moving object included in a neighboring local block of the disclosure.
FIG. 7 is a flowchart illustrating a method by which an electronic device obtains movement information of a moving object included in a neighboring local block by expanding a local block, according to an embodiment of the disclosure.
FIG. 8A is a diagram illustrating expanding the size of a local block of an electronic device, according to an embodiment of the disclosure.
FIG. 8B is a diagram for describing obtaining movement information of a moving object in a neighboring local block by expanding the size of a local block of an electronic device, according to an embodiment of the disclosure.
FIG. 9 illustrates a user interface (UI) displayed by an electronic device to represent a safety way and an expected collision point, according to an embodiment of the disclosure.
FIG. 10 illustrates a UI displayed by an electronic device to represent an alternative way, according to an embodiment of the disclosure.
FIG. 11 is a block diagram illustrating configurations of an electronic device and a vehicle, according to an embodiment of the disclosure.
FIG. 12 is a diagram for describing an operation performed by an electronic device using an artificial intelligence (Al) technology, according to an embodiment of the disclosure.
FIG. 13 is a digram illustrating operation of an electronic device working with a server, according to an embodiment of the disclosure.
FIG. 14 is a diagram for describing FIG. 13 in detail.

### Mode for Invention

The terms are selected from among common terms widely used at present, taking into account principles of the disclosure, which may however depend on intentions of those of ordinary skill in the art, judicial precedents, emergence of new technologies, and the like. Some terms as herein used are selected at the applicant's discretion, in which case, the terms will be explained later in detail in connection with embodiments of the disclosure. Therefore, the terms should be defined based on their meanings and descriptions throughout the disclosure.

As used herein, the singular forms "a", "an" and "the" are intended to include the plural forms as well, unless the context clearly indicates otherwise. All terms including technical and scientific terms used herein have the same meaning as commonly understood by one of ordinary skill in the art to which this disclosure belongs.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

The expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware. For example, in some situations, an expression "a system configured to do something" may refer to "an entity able to do something in cooperation with" another device or parts. For example, "a processor configured to perform A, B and C functions" may refer to a dedicated processor, e.g., an embedded processor for performing A, B and C functions, or a general purpose processor, e.g., a Central Processing Unit (CPU) or an application processor that may perform A, B and C functions by executing one or more software programs stored in a memory.

In the specification, a vehicle refers to any type of car that moves on the road, and especially a car equipped with an electronic device.

A moving object as herein used refers to any type of transportation to move on the sidewalk or the road by a driver. The moving object may include, for example, a vehicle, micro mobility, a two-wheeled vehicle (motor bike), a bicycle, an electric bicycle, an electric kickboard, or an electric wheel.

In the specification, a surrounding moving object refers to a moving object located or moving in the vicinity of a vehicle equipped with an electronic device. The surrounding moving object may refer to a moving object located or moving within a preset distance from a vehicle. In an embodiment, the surrounding moving object may refer to a moving object located or moving in a local block of a vehicle.

In the specification, the local block refers to a space or an area within a preset range centered on a location of the vehicle or the moving object. In an embodiment, the local block may be an area in the shape of a circle centered on a location of the vehicle or the moving object and having a diameter of tens of meters or hundreds of meters. The local block is not, however, limited thereto, and may have various shapes such as an ellipse, a triangle, a rectangle, etc.

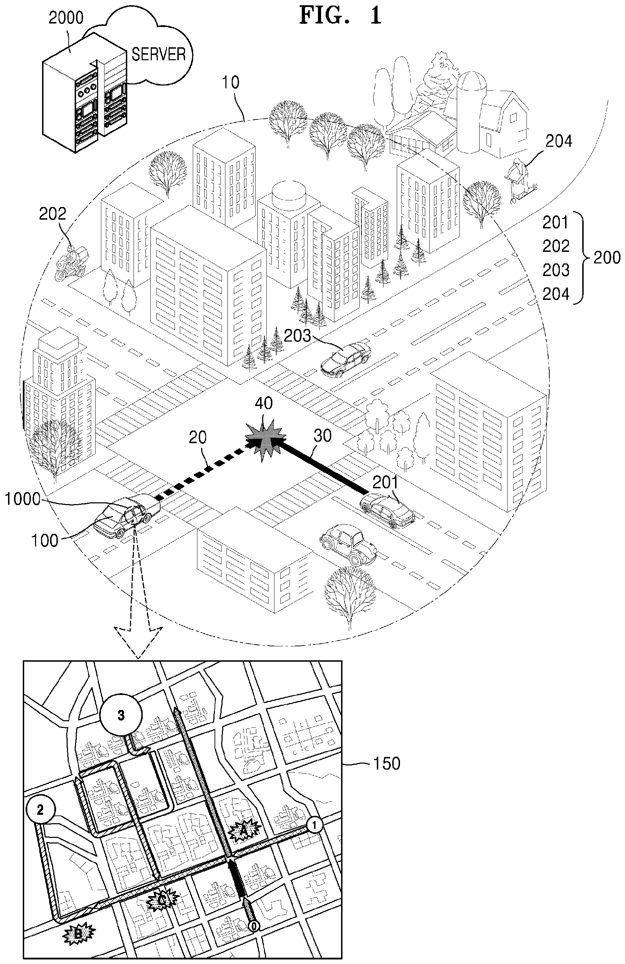

FIG. 1 is a conceptual diagram for describing a method of operating an electronic device 1000, according to an embodiment of the disclosure. Specifically, FIG. 1 illustrates an embodiment in which the electronic device 1000 mounted on a vehicle 100 obtains movement information of each of surrounding moving objects 200, determines an expected movement path 30 of the surrounding moving object 200 and a safety way 20 of the vehicle 100 based on the movement information, and predicts an expected collision point 40 based on the safety way 20 and the expected movement path 30 of the surrounding moving object 200.

Referring to FIG. 1, the electronic device 1000 may be mounted on an external structure of the vehicle 100 or inside the vehicle 100.

The electronic device 1000 may obtain movement information of the surrounding moving object 200 located or moving in a local block 10. The local block 10 as used herein refers to a space or area in a preset range centered on the location of the vehicle 100 equipped with the electronic device 1000. The local block 10 may be an area in the shape of a circle centered on the location of the vehicle 100 and having a diameter of tens of meters or hundreds of meters. In FIG. 1, the surrounding moving object 200 is shown as including a total of 4 moving objects 201, 202, 203 and 204, however this is merely an example. There may be one or more surrounding moving objects 200. Among the surrounding moving objects 200, a first surrounding moving object 201 to a third surrounding moving object 203 may be located in the local block 10 or moving in the local block 10, and a fourth surrounding moving object 204 may be located outside the local block 10.

In an embodiment, the electronic device 1000 may use device-to-device (D2D) communication to receive a data packet including the movement information of the at least one surrounding moving object 201, 202, and 203 directly from a device included in the at least one surrounding moving object 201, 202 and 203 in the local block 10. It is not, however, limited thereto, and the electronic device 1000 may receive a data packet including the movement information of the at least one surrounding moving object 201, 202 and 203 from a server 2000. In an embodiment, the electronic device 1000 may receive a data packet including the movement information of the at least one surrounding moving object 201, 202 and 203 at preset time intervals.

The movement information of the surrounding moving object 200 may include, for example, at least one of a departure point, a destination, a stopover, a current location, a moving speed, a type and driving profile data of the surrounding moving object 200. The type may refer to a kind of the moving object, and include, for example, at least one of a sedan, a sport utility vehicle (SUV), a commercial vehicle, a micro mobility vehicle, a two-wheeled vehicle (motor bike), a bicycle, an electric bicycle, an electric kickboard, or an electric wheel. The driving profile data may be accumulated data about movement patterns of a driver who drives the moving object, and may include data about, for example, at least one of a path miss rate, a path compliance rate, an average moving speed and a number of re-routing times.

The electronic device 1000 may predict the movement path 30 of each of the at least one surrounding moving object 201, 202 and 203 by obtaining a data packet in real time, which includes the movement information of each of the at least one surrounding moving object 201, 202 and 203 located or moving in the local block 10. In an embodiment, the electronic device 1000 may predict the movement path 30 of the at least one surrounding moving object 201, 202 and 203 based on at least one of the departure point, the destination, the stopover, the current location and the moving speed of the at least one surrounding moving object 201, 202 and 203 included in the movement information obtained.

The electronic device 1000 may determine the safety way 20 of the vehicle based on the movement path 30 of the at least one surrounding moving object 201, 202 and 203 and at least one of a departure point, a destination and a stopover of the vehicle 100. The safety way 20 is a path that reflects all of the movement path of the at least one surrounding moving object 201, 202 and 203 that may enter to a direction toward or approach the vehicle 100, and a path, moving speed, a movement pattern, etc., of the vehicle 100, and refers to a path that guarantees safety. In an embodiment, the electronic device 1000 may predict the expected collision point 40 due to a surrounding moving object located on or approaching the safety way 20.

The electronic device 1000 may display a user interface (Ul) 150 that represents the safety way 20 and the expected collision point 40. In an embodiment, the UI 150 may include a UI representing the at least one surrounding moving object 201, 202 and 203 included in the local block 10, a UI representing the safety way 20, a UI representing a movement path of each of the at least one surrounding moving object 201, 202 and 203, and a UI representing the expected collision point 40. The UI 150 may be displayed in the form of a graphic user interface (GUI) on at least one of a display device in the vehicle 100, e.g., a center information display (CID), a navigation device, a dashboard display, a head-up display (HUD), or a passenger seat display.

In an embodiment, the electronic device 1000 may output a warning notification when recognizing a surrounding moving object approaching the expected collision point 40 or when the movement path 30 of the surrounding moving object overlaps the safety way 20 of the vehicle 100. For example, the electronic device 1000 may output a UI notification on the display, output warning message sound, or provide a warning notification through vibration on the steering wheel.

In an embodiment, the electronic device 1000 may display an alternative path to avoid and detour around the expected collision point 40 when a collision is expected as it runs to the expected collision point 40 or when the at least one surrounding moving object 201, 202 and 203 approaches the vehicle 100.

A prior art has been used to prevent accidents by recognizing another vehicle or a moving object approaching the vehicle 100 using a camera, radar sensor, light detection and radar (LIDAR) sensor or other proximity sensor attached to the vehicle 100. However, the prior art has a technological limit in that it may only recognize other vehicles or moving object approaching the vehicle 100 within a predetermined distance, and is unable to prevent an accident with a vehicle or moving object in a blind area, which may not be identified by the camera, radar sensor, or LIDAR sensor. Furthermore, it may not foresee a movement path of another vehicle or a moving object around the vehicle 100, so the drivers have no choice but look around in person and drive safely even with the camera or various sensors, and there is a limit of accident prevention.

In an embodiment of the disclosure, the electronic device 1000 may provide a technological effect of preventing accidents even without the camera and various sensors by obtaining movement information of at least one surrounding moving object 201, 202 and 203 located or moving around the vehicle 100, predicting the movement path 30 of each of the at least one surrounding moving object 201, 202 and 203 based on the movement information obtained, determining the safety way 20 that guarantees safety of the vehicle 100 based on the departure point, destination, and stopover of the vehicle 100 and the movement path of the at least one surrounding moving object 201, 202 and 203, and predicting the expected collision point 40. Furthermore, in an embodiment of the disclosure, the electronic device 1000 may prevent collision accidents in blind areas that would not otherwise be prevented even with the camera and various sensors. Moreover, in an embodiment of the disclosure, the electronic device 1000 may display the UI 150 that represents the safety way 20, the movement path 30 of the at least one surrounding moving object 201, 202 and 203 and the expected collision point 40 and output a warning notification when the surrounding moving object 201, 202 or 203 approaches, thereby drawing attention of the driver and preventing the driver from getting into an accident by negligence.

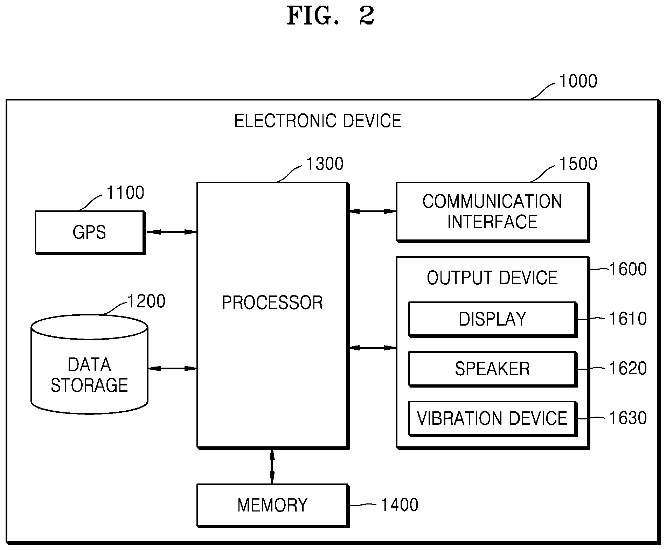

FIG. 2 is a block diagram illustrating components of the electronic device 1000, according to an embodiment of the disclosure.

The electronic device 1000 may be mounted on an external structure of the vehicle 100 (see FIG. 1) or inside the vehicle 100. Referring to FIG. 2, the electronic device 1000 may include a global positioning system (GPS) sensor 1100, a data storage 1200, a processor 1300, a memory 1400, a communication interface 1500, and an output device 1600. The GPS sensor 1100, the data storage 1200, the processor 1300, the memory 1400, the communication interface 1500, and the output device 1600 may be electrically and/or physically connected to one another. The components as shown in FIG. 2 are merely according to an embodiment of the disclosure, but the components included in the electronic device 1000 are not limited thereto. The electronic device 1000 may not include some of the components shown in FIG. 2 or may further include components not shown in FIG. 2. In an embodiment, the electronic device 1000 may further include an input interface for receiving a user input to input a destination or a stopover for driving of the vehicle.

The GPS sensor 1100 is configured to receive a GPS signal and obtain information about a current location of the vehicle based on the GPS signal. In an embodiment, the GPS sensor 1100 may receive a navigation message from at least one GPS satellite located above the Earth to obtain location information of the vehicle. Specifically, the GPS sensor 1100 may obtain coordinates of the current location of the vehicle by measuring propagation delay of radio waves from the GPS satellite. The GPS sensor 1100 may provide information about the current location of the vehicle to the processor 1300 or store the information in the data storage 1200.

The data storage 1200 stores movement information of the vehicle 100 (see FIG. 1) and movement information of the at least one surrounding moving object 201, 202 and 203 (see FIG. 1) received through the communication interface 1500. The movement information may include, for example, at least one of a departure point, a destination, a stopover, a current location, a moving speed, a vehicle type and driving profile data of the vehicle 100 or the at least one surrounding moving object 201, 202 and 203. In an embodiment, the data storage 1200 may store a local block list including object identities (IDs) and movement information of the surrounding moving objects 201, 202 and 203 in the local block 10 (see FIG. 1), which is an area or space of a preset range centered on the location of the vehicle.

The data storage 1200 may include a non-volatile memory. The non-volatile memory may store and maintain information even without being powered, and use the information again when powered. The non-volatile memory may include, for example, at least one of a flash memory, a hard disk, a solid-state drive (SSD), a multimedia card micro type, a card-type memory (e.g., a secure digital (SD) or extreme digital (XD) memory), a read-only memory (ROM), a magnetic memory, a magnetic disk, or an optical disk.

The processor 1300 may execute one or more instructions of a program stored in the memory 1400. The processor 1300 may include hardware components for performing arithmetic, logical, and input/output operations and signal processing. The processor 1300 may include at least one of e.g., a central processing unit (CPU), a microprocessor, a graphic processing unit (GPU), an application processor, an application specific integrated circuit (ASIC), a digital signal processor (DSP), a digital signal processing device (DSPD), a programmable logic device (PLD), and a field programmable gate array (FPGA), without being limited thereto.

In an embodiment, the processor 1300 may be implemented with a dedicated hardware chip that performs artificial intelligence (Al) learning.

The memory 1400 may include, for example, a non-volatile memory including at least one of a flash memory, a hard disk, a multimedia card micro type memory, a card type memory (e.g., SD or XD memory), a read-only memory (ROM), an electrically erasable programmable ROM (EEPROM), or a programmable ROM (PROM), and a volatile memory such as a random-access memory (RAM) or a static RAM (SRAM).

Instructions, a data structure, and program codes that are readable to the processor 1300 may be stored in the memory 1400. In the following embodiments, the processor 1300 may be implemented by executing the instructions or codes of the program stored in the memory 1400.

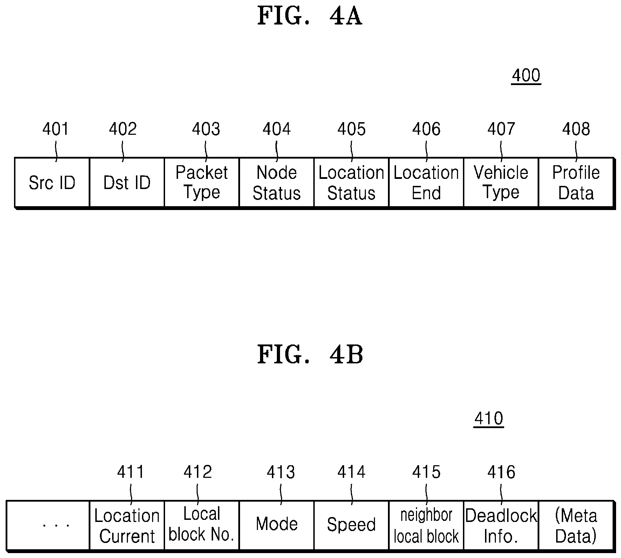

The processor 1300 may obtain movement information of at least one surrounding moving object through the communication interface 1500. In an embodiment, the processor 1300 may obtain movement information of at least one surrounding moving object located or moving in the local block that represents a space or an area in a preset range centered on the location of the vehicle. The local block may be an area in the shape of a circle centered on the location of the vehicle and having a diameter of tens of meters or hundreds of meters. In an embodiment, the processor 1300 may control the communication interface 1500 to receive a data packet including movement information about at least one of the departure point, the destination, the stopover, the current location, the moving speed, the vehicle type and the driving profile data of each of the at least one surrounding moving object. In an embodiment, the processor 1300 may store the data packet received through the communication interface 1500 in the data storage 1200. A specific example of the data packet received by the processor 1300 will be described in detail in FIGS. 4A and 4B.

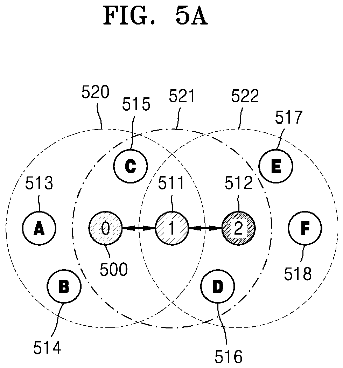

In an embodiment, the processor 1300 may receive information about a neighboring local block adjacent to the local block through the communication interface 1500, and obtain information about at least one surrounding moving object included not in the local block but in the neighboring local block from the received information about the neighboring local block. The neighboring local block is a space or area determined as an area of a preset range centered on one of the surrounding moving objects included in the local block of the vehicle and is adjacent to the local block of the vehicle, and may share at least one surrounding moving object with the local block of the vehicle. In other words, the processor 1300 may obtain movement information not only about a first surrounding moving object included in the local block but expand to the neighboring local block to further obtain movement information about a second surrounding moving object included only in the neighboring local block. A specific embodiment in which the processor 1300 obtains the movement information about the second surrounding moving object included in the neighboring local block will be described in detail in FIGS. 5A to 7.

The processor 1300 may predict a movement path of at least one surrounding moving object based on movement information of the at least one surrounding moving object obtained. In an embodiment, the processor 1300 may predict a movement path of each of at least one surrounding moving object based on information about the departure point, the destination and the stopover of at least one surrounding moving object and information about the current location and moving speed of the at least one surrounding moving object. In an embodiment, the movement path of the surrounding moving object may be predicted as a moving trajectory leading from the departure point to the destination or from the departure point to the destination through the stopover. In an embodiment, the movement path of the surrounding moving object may be predicted with a trajectory of GPS locations accumulated with the past movement. For example, the processor 1300 may use the movement information of the surrounding moving object to recognize whether the past moving trajectory is linear or has a zigzag form, and based on the recognized form and information about the departure point, the destination and the stopover, predict a movement path of the surrounding moving object.

The processor 1300 may determine the safety way of the vehicle based on the movement path of the at least one surrounding moving object and information about at least one of the departure point, the destination and the stopover of the vehicle stored in the data storage 1200. In an embodiment, the safety way refers to a path that reflects all of the movement path of the at least one surrounding moving object entering or approaching toward the vehicle, and the path, moving speed and movement pattern of the vehicle and guarantees safety.

The processor 1300 may predict the expected collision point due to a surrounding moving object located on or approaching the safety way. In an embodiment, the processor 1300 may predict an expected collision point based on the movement path of the at least one surrounding moving object and the safety way of the vehicle. In an embodiment, the processor 1300 may predict the expected collision point to be a point at which the safety way of the vehicle meets an virtual line extending from the movement path of the at least one surrounding moving object, and calculate a coordinate value of the location of the expected collision point. Once the coordinate value of the location of the expected collision point is calculated, the processor 1300 may calculate an arrival time of the vehicle to the expected collision point based on the current location and moving speed of the vehicle, and predict an expected time of collision between the vehicle and the surrounding moving object based on the current location and the moving speed of the surrounding moving object.

The processor 1300 may output a warning notification through the output device 1600 when recognizing a surrounding moving object approaching the expected collision point or when the movement path of the surrounding moving object overlaps the safety way of the vehicle. In an embodiment, the processor 1300 may control the output device 1600 to output the warning notification for the driver a preset time before the expected collision time. In an embodiment, the processor 1300 may output a UI notification such as a warning message on a display 1610, output a voice warning message or waring sound through a speaker 1620, or provide a warning notification through vibration on the steering wheel through a vibration device 1630.

The processor 1300 may recognize a dangerous object based on the driving profile data of each of the at least one surrounding moving object, and control intervals and the number of times of outputting the warning notification when the dangerous object approaches the expected collision point or is located on the safety way of the vehicle. In an embodiment, the processor 1300 may recognize a surrounding moving object having at least one of the path miss rate, the average moving speed and the number of re-routing times included in the driving profile data of the at least one surrounding moving object exceeding a preset threshold, and determine the recognized surrounding moving object to be the dangerous object. Herein, the path miss rate refers to a rate of the number of times of driving or moving on another path other than the movement path without following the guidance of the movement path to the whole number of driving times. The number of re-routing times refers to the accumulated number of times of re-searching a movement path to the destination as a result of failing to follow the movement path. Furthermore, the processor 1300 may recognize a surrounding moving object having a path compliance rate less than a preset threshold in the driving profile data of the at least one surrounding moving object, and determine the recognized surrounding moving object as a dangerous object. The path compliance rate refers to a rate of the number of times of compliance with the guidance of the movement path to the whole number of driving times. The driving profile data of the at least one surrounding moving object may be obtained through the communication interface 1500.

In an embodiment, the processor 1300 may set a shorter interval for obtaining movement information of the surrounding moving object recognized as the dangerous object. For example, the processor 1300 may receive the movement information of the dangerous object once per 500 ms. In an embodiment, the processor 1300 may make the interval of outputting the warning notification shorter or increase the frequency of outputting the waring notification.

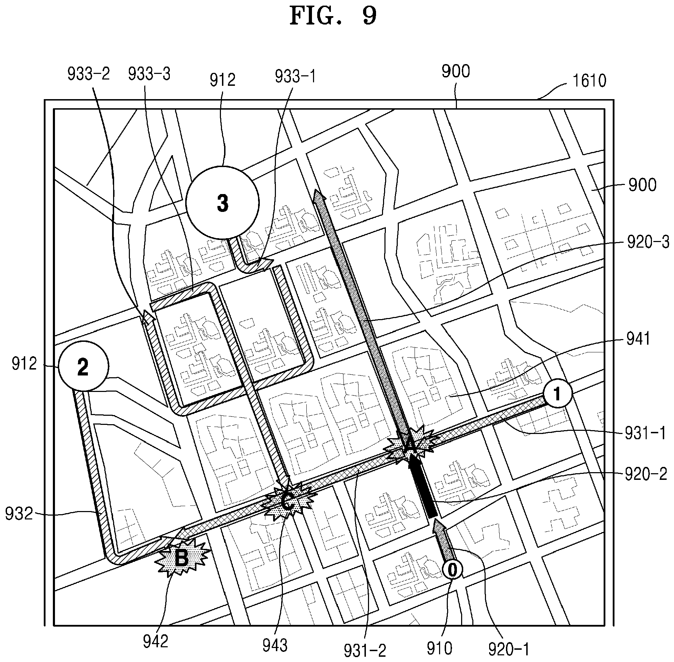

The processor 1300 may display a UI representing the safety way and the expected collision point on the display 1610. In an embodiment, the processor 1300 may display a UI representing not only the safety way and the expected collision point but also at least one surrounding moving object included in the local block and a movement path of each of the at least one surrounding moving object. In an embodiment, the processor 1300 may display each section of the safety way in a different color of UI based on a degree of risk determined according to at least one of a location of at least one surrounding moving object on the safety way, whether to pass through a stopover, moving speed and an expected collision point. In an embodiment, the processor 1300 may display at least one surrounding moving object in a circular UI based on the driving profile data of at least one surrounding moving object. In this case, the diameter of the circular UI may be determined according to the driving profile data, e.g., at least one of the path miss rate, the pass compliance rate, the average moving speed and the number of re-routing times. An embodiment of a UI displayed by the processor 1300 will be described in FIG. 9 in detail.

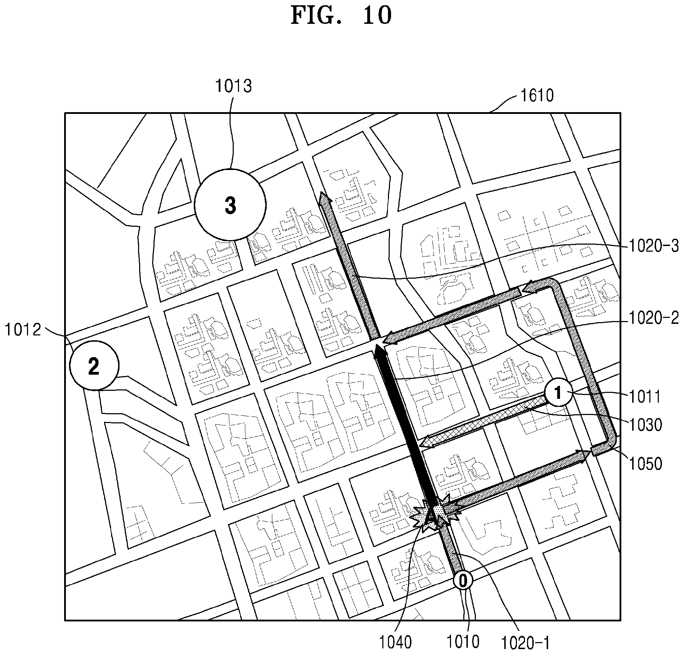

The processor 1300 may display a UI on the display 1610, which represents an alternative path that avoids and detours around the expected collision point when a collision accident is expected as the vehicle drives to the expected collision point or at least one surrounding moving object in the local block approaches the vehicle. A specific embodiment in which the processor 1300 displays a UI to represent the alternative path will be described in FIG. 10 in detail.

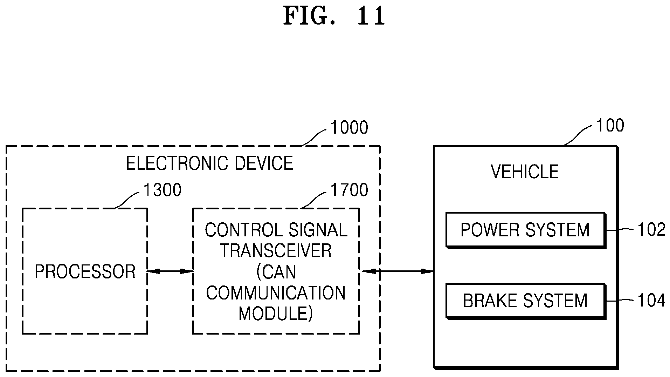

The processor 1300 may transmit, to a brake system 104 (see FIG. 11) of the vehicle, an emergency brake control signal to stop driving the vehicle when a collision accident between the vehicle and at least one surrounding moving object is expected. A specific embodiment in which the processor 1300 transmits the emergency brake control signal will be described in FIG. 11 in detail.

The communication interface 1500 is a device configured to perform wireless data communication with a server or another device. In an embodiment, the communication interface 1500 may receive movement information of a surrounding moving object located or moving around the vehicle, under the control of the processor 1300. In an embodiment, the communication interface 1500 may receive a data packet including the movement information of the surrounding moving object through device-to-device (D2D) communication with a communication module or communication device included in the surrounding moving object. The D2D communication may include at least one of communication schemes including, for example, wireless fidelity (Wi-Fi) direct (WFD), mobile bluetooth, long term evolution D2D (LTE-D2D), and fifth generation (5G) D2D. It is not, however, limited thereto, and the communication interface 1500 may receive a data packet including movement information of a surrounding moving object from an external server 2000 (see FIG. 1).

The communication interface 1500 may transmit or receive a data packet in a data communication scheme including, for example, a wireless local area network (WLAN), Wi-Fi, bluetooth, zigbee, WFD, infrared data association (IrDA), bluetooth low energy (BLE), near field communication (NFC), wireless broadband Internet (Wibro), world interoperability for microwave access (WiMAX), shared wireless access protocol (SWAP), wireless gigabit alliance (WiGig) and radio frequency (RF) communication. In an embodiment, the communication interface 1500 may transmit the driving profile data of the vehicle stored in the data storage 1200 to the communication module or communication device included in the surrounding moving object, under the control of the processor 1300. In an embodiment, the communication interface 1500 may transmit the driving profile data stored in the data storage 1200 to the surrounding moving object only when the operating mode of the electronic device 1000 is an on-trip mode, and may not transmit the driving profile data of the vehicle when the operating mode is an observer mode.

The output device 1600 is configured to display a UI or output a warning notification. The output device 1600 may include the display 1610, the speaker 1620 and the vibration device 1630.

The display 1610 may display a UI that represents at least one of at least one surrounding moving object in the local block, a movement path of the at least one surrounding moving object, a safety way of the vehicle, and an expected collision point. The display 1610 may be configured with at least one of a liquid crystal display (LCD), a thin film transistor-liquid crystal display (TFT-LCD), organic light-emitting diodes (OLEDs), a flexible display, a three-dimensional (3D) display, or an electrophoretic display.

The speaker 1620 is configured to output an audio signal. In an embodiment, the speaker 1620 may output a voice warning message or a warning sound.

The vibration device 1630 may be embedded at a predetermined location inside the steering wheel of the vehicle. The vibration device 1630 may provide a warning vibration under the control of the processor 1300. In an embodiment, the processor 1300 may output a vibration signal by directly controlling the vibration device 1360 of the steering wheel or requesting a vehicle driving system (e.g., an electronic control unit (ECU)) to output vibration in a predetermined vibration region.

Although not shown, the electronic device 1000 may further include a user input configured to receive various user inputs. In an embodiment, the user input may receive a user input to set a destination or a stopover through a navigation system. The user input may receive the user input through, for example, a button, a keypad, a trackball, a jog switch, a jog dial, a knob, etc., or receive a touch input from touching a touch pad or touch screen, a drag input, a swipe input, etc. To receive a touch input, the user input may be configured with a touch screen including a touch pad. In this case, the touch screen may display a GUI for receiving the user input.

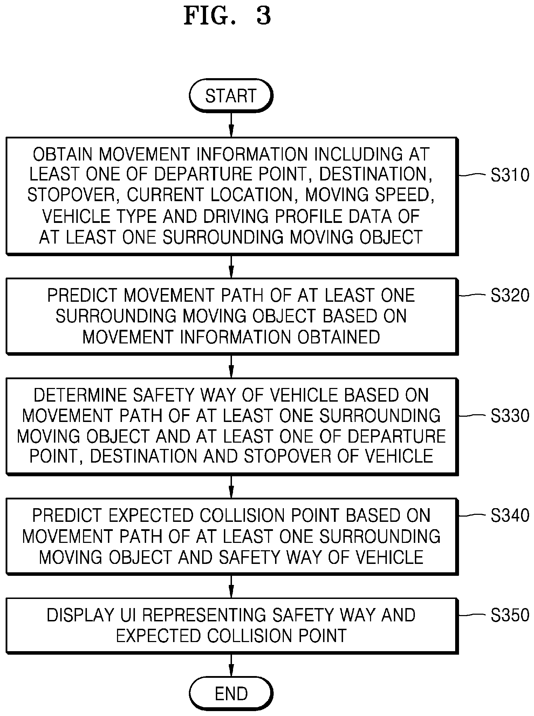

FIG. 3 is a flowchart illustrating a method of operating the electronic device 1000, according to an embodiment of the disclosure.

In operation S310, the electronic device 1000 obtains movement information including at least one of a departure point, a destination, a stopover, a current location, a moving speed, a vehicle type and driving profile data of at least one surrounding moving object. In an embodiment, the electronic device 1000 may receive a data packet including the movement information from at least one moving object located in a local block within a preset range centered on a location of the vehicle.

In operation S320, the electronic device 1000 predicts a movement path of the at least one surrounding moving object based on the movement information obtained. In an embodiment, the electronic device 1000 may predict a movement path of each of at least one surrounding moving object based on information about the departure point, the destination and the stopover of at least one surrounding moving object and information about the current location and moving speed of the at least one surrounding moving object. In an embodiment, the movement path of the surrounding moving object may be predicted as a moving trajectory leading from the departure point to the destination or from the departure point to the destination through the stopover.

The at least one surrounding moving object each provides information about its departure point, the destination, and the stopover to the electronic device 1000. However, even when the at least one surrounding moving object does not provide the information about the departure point, the destination and the stopover, the processor 1300 (see FIG. 2) of the electronic device 1000 may store history information about the departure point, the destination and the stopover of the surrounding moving object obtained in the past in the data storage 1200 (see FIG. 2), and predict a movement path of a surrounding moving object based on the history information stored in the data storage 1200. When the surrounding moving object is an object that makes a regular movement, the movement pattern may be predicted based on the past movement history information. For example, when the driver who drives the surrounding moving object is an office worker, he/she often transfers in rush hour and often sets the departure point to a company and the destination to home. In another example, when the surrounding moving object is a bus or a train, it runs regularly, so the departure point and the destination are often set to locations of stops on the route according to time. Furthermore, when the surrounding moving object is a delivery vehicle, a predetermined delivery person is more likely to manage a predetermined area or often visit delivery places in predetermined hours. The processor 1300 may classify the past movement history of the surrounding moving object stored in the data storage 1200 by a predetermined classification criterion, for example, hour of the day, day, season, weather, or whether it is on weekends, and predict the movement path of the surrounding moving object according to a condition in a situation where the movement path of the surrounding moving object is to be predicted. For example, when the surrounding moving object is a vehicle driven by an office worker in rush hour on a weekday, the processor 1300 may predict the movement path about what route it runs to what destination in rush hour on a weekday by searching the information stored in the data storage 1200 about the past movement history of the vehicle driven by the office worker even without obtaining the movement information from the surrounding moving object.

In operation S330, the electronic device 1000 determines a safety way of the vehicle based on the movement path of the at least one surrounding moving object and at least one of the departure point, destination and stopover of the vehicle. In an embodiment, the safety way refers to a path that reflects all of the movement path of the at least one surrounding moving object entering or approaching toward the vehicle, and the path, moving speed and movement pattern of the vehicle and guarantees safety.

In operation S340, the electronic device 1000 predicts an expected collision point based on the movement path of the at least one surrounding moving object and the safety way of the vehicle. In an embodiment, the electronic device 1000 may predict the expected collision point due to a surrounding moving object located on or approaching the safety way. In an embodiment, the electronic device 1000 may predict the expected collision point to be a point at which the safety way of the vehicle meets an virtual line extending from the movement path of the at least one surrounding moving object, and calculate a coordinate value of the location of the expected collision point.

In operation S350, the electronic device 1000 displays a UI to represent the safety way and the expected collision point. In an embodiment, the electronic device 1000 may display a UI representing not only the safety way and the expected collision point but also at least one surrounding moving object included in the local block and a movement path of each of the at least one surrounding moving object. In an embodiment, the electronic device 1000 may display each section of the safety way in a different color of UI based on a degree of risk determined according to at least one of a location of at least one surrounding moving object on the safety way, whether to pass through a stopover, moving speed and an expected collision point. In an embodiment, the electronic device 1000 may display the at least one surrounding moving object in a circular UI based on the driving profile data of the at least one surrounding moving object.

In operation S320, in a case that a movement path is predicted based on the past history information stored in the data storage 1200 without reception of movement information of the surrounding moving object, the electronic device 1000 may display the predicted movement path of the surrounding moving object in a dotted UI and display a movement path of another surrounding moving object or the safety way of the vehicle in a solid UI so that they may be distinguished from each other.

FIG. 4A illustrates an example of a data packet 400 including movement information of a surrounding moving object received by the electronic device 1000 of the disclosure.

The data packet 400 shown in FIG. 4A is a packet received first from a surrounding moving object. Referring to FIG. 4A, the data packet 400 may include information about a source id (Src ID) 401, a destination id (Dst ID) 402, a packet type 403, object status (node status) 404, a departure point (location start) 405, a destination (location end) 406, a vehicle type 407 and driving profile data 408.

The source id 401 includes identification address information of a communication module or communication device of the surrounding moving object, which transmits the data packet 400. The source id 401 may include, for example, information of one of an Internet protocol (IP) address, a medium access control (MAC) address or a port number of the communication module equipped or included in the surrounding moving object.

The destination id 402 includes identification address information of a target object to receive the data packet 400. In an embodiment, as the data packet 400 is a packet to be transmitted to the electronic device 1000 mounted on the vehicle from the surrounding moving object, the destination id 402 may include information of at least one of an IP address, a MAC address or a port number of the electronic device 1000.

The packet type 403 includes information about a type of the data packet 400.

The object status 404 includes status information about whether the surrounding moving object is currently in motion or stopped.

The departure point 405 includes information about a departure point of the surrounding moving object.

The destination 406 includes information about a destination of the surrounding moving object.

The vehicle type 407 includes information about a type of a vehicle when the surrounding moving object is the vehicle. The type of the vehicle may include, for example, information about a type of one of a sedan, an SUV, a commercial vehicle (e.g., a bus, a truck, etc.), micro mobility, or a two-wheeled vehicle (e.g., a motor bike).

The vehicle type 407 may further include, for example, information about a production year of the vehicle or a model name. It is to reflect the fact that, for example, vehicles manufactured in a certain year may have flaws and drivers who drive a certain model of vehicle have a propensity to prefer high-speed driving or a tendency to violate traffic signals.

The driving profile data 408 includes accumulated data of movement patterns of the driver who drives the surrounding moving object. The driving profile data 408 may include data about, for example, at least one of a path miss rate, a path compliance rate, an average moving speed and a number of re-routing times.

FIG. 4B illustrates an example of a data packet 410 including movement information of a surrounding moving object received by the electronic device 1000 of the disclosure.

The data packet 410 shown in FIG. 4B is a packet periodically received from a surrounding moving object at preset time intervals. Referring to FIG. 4B, the data packet 410 may include information about a current location (Location Current) 411, a local block number (Local block No.) 412, an operation mode (Mode) 413, a moving speed (Speed) 414, a neighboring local block (neighbor local block) 415, and deadlock information (Deadlock Info) 416.

The current location 411 includes information about a coordinate value of a current GPS location of the surrounding moving object.

The local block number 412 includes information about a number of the local block in which the surrounding moving object is located or moving. The number of the local block in which the surrounding moving object is located is given in a relative or absolute manner.

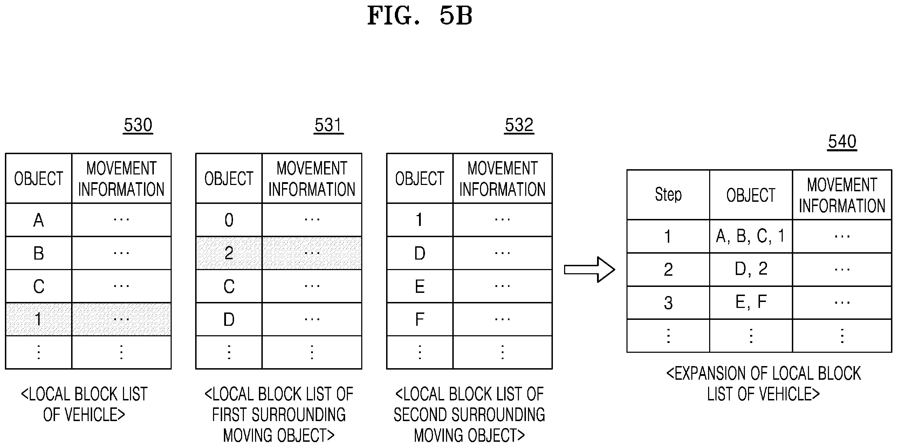

In the relative local numbering, number 1 is given to a local block where the surrounding moving object itself is located or the communication module or communication device included or equipped in the surrounding moving object is located. In this case, the local block number 412 may further include a list including at least one other surrounding moving object located or moving in the local block of number 1. The list of the local block will be described in FIG. 5B in detail.

The absolute local number is given based on the information about coordinates of the GPS location of the local block. In an embodiment, in the absolute local numbering method, a unique id may be given based on administrative districts such as 'province', 'city', 'gu', 'dong', 'district' or 'town' (e.g., for Gyeonggi province, Suwon city Maetan 1-dong ##, 'SW_M1-## is given) or a unique id of the longitude and latitude based on the coordinate value of the GPS location may be given (e.g., 41°24'12.2"N 2°10'26.5"E).

The operation mode 413 includes information relating to operation of the surrounding moving object. The operation mode 413 may include, for example, a stopped mode (idle), a driving mode (on-trip), and an observer mode (observer) of the surrounding moving object. The observer mode refers to a mode in which the surrounding moving object does not provide its movement information but receives only movement information of the electronic device 1000 mounted on the vehicle or the other surrounding moving object.

The moving speed 414 includes information about a moving speed of the surrounding moving object.

The neighboring local block 415 includes information about another local block adjacent to the local block in which the surrounding moving object is located. In an embodiment, the neighboring local block 415 may include a list of other surrounding moving objects located or moving in the neighboring local block. The neighboring local block will be described in FIGS. 5A and 5B in detail.

The deadlock information 416 includes information about a deadlock state in which driving is not possible along the movement path due to another surrounding moving object and an alternative path may not be selected.

FIG. 5A is a diagram of expanding a local block 520 of the electronic device 1000 to neighboring local blocks 521 and 522 of surrounding moving objects, according to an embodiment of the disclosure.

FIG. 5B is a diagram for describing obtaining of movement information of moving objects in the neighboring local blocks 521 and 522 by expanding the local block 520 of the electronic device 1000, according to an embodiment of the disclosure.

Referring to FIG. 5A, in the local block 520, which is an area or space of a preset range centered on the location of the electronic device 1000 mounted on a vehicle 500, a first surrounding moving object 511, a third surrounding moving object 513, a fourth surrounding moving object 514 and a fifth surrounding moving object 515 may be located or in motion. Referring to FIG. 5B together, a local block list 530 of the vehicle 500 may include objects such as the first surrounding moving object 511, the third surrounding moving object 513, the fourth surrounding moving object 514 and the fifth surrounding moving object 515 and their respective movement information. The electronic device 1000 may store the local block list 530 of the vehicle 500 in the data storage 1200 (see FIG. 2).

The electronic device 1000 may obtain a local block list 531 of a first neighboring local block 521 centered on the location of the first surrounding moving object 511 among the at least one surrounding moving object 511, 513, 514 and 515 included in the local block list 530. The neighboring local block is a space or area determined to be an area of a preset range centered on a surrounding moving object (the first surrounding moving object 511 in FIG. 5A) included in the local block 520 of the vehicle 500, and adjacent to the local block 520 of the vehicle 500, and may share at least one surrounding moving object with the local block 520 of the vehicle 500. Referring to FIG. 5A, in the first neighboring local block 521, the vehicle 500, a second surrounding moving object 512, the fifth surrounding moving object 515 and a sixth surrounding moving object 516 may be located or in motion.

In an embodiment, the electronic device 1000 may receive the local block list 531 of the first neighboring local block 521 from a communication module or communication device of the first surrounding moving object 511. For example, the electronic device 1000 may use D2D communication to receive the local block list 531 from the communication module or communication device of the first surrounding moving object 511. It is not, however, limited thereto, and in another embodiment, the electronic device 1000 may receive the local block list 531 of the first neighboring local block 521 from the server 2000 (see FIG. 1). In this case, the first surrounding moving object 511 may have uploaded information about the local block list 531 of the first neighboring local block 521 to the server 2000. Referring to FIG. 5B together, a local block list of the first surrounding moving object 511, i.e., the local block list 531 of the first neighboring local block 521 based on the vehicle 500 may include objects such as the vehicle 500, the second surrounding moving object 512, the fifth surrounding moving object 515 and the sixth surrounding moving object 516, and their respective movement information.

The electronic device 1000 may compare the received local block list 531 of the first neighboring local block 521 with moving objects included in the local block list 530 stored in the data storage 1200, and based on a result of the comparing, identify at least one surrounding moving object not included in the local block list 530. In the embodiment shown in FIG. 5B, the electronic device 1000 may identify the second surrounding moving object 512 and the sixth surrounding moving object 516 not included in the local block 520 by comparing the local block list 531 of the first neighboring local block 521 with the local block list 530 of the local block 520 of the vehicle 500. The electronic device 1000 may obtain movement information of the identified second and sixth surrounding moving objects 512 and 516.

The electronic device 1000 may reexpand the local block list from the surrounding moving object obtained through the local block list expanded as described above. Referring to FIG. 5B, the electronic device 1000 may receive a local block list 532 with respect to one of the second and sixth surrounding moving objects 512 and 516 which are the surrounding moving objects obtained by expanding the local block list one time, i.e., the second neighboring local block 522 which is a local block of the second surrounding moving object 512. Similar to the reception of the first neighboring local block 521, the electronic device 1000 may use D2D communication to receive the local block list 532 of the second neighboring local block 522 directly from the communication module or communication device included in the second surrounding moving object 512. Like the aforementioned local block expansion, the electronic device 1000 may identify at least one surrounding moving object not included in the local block list 531 of the first neighboring local block 521 by comparing the local block list 531 of the first neighboring local block 521 with the local block list 532 of the second neighboring local block 522. In the embodiment shown in FIG. 5B, the electronic device 1000 may identify a seventh surrounding moving object 517 and an eighth surrounding moving object 518.

Referring to a local block list expansion table of the vehicle of FIG. 5B, assuming that an operation of the electronic device 1000 obtaining movement information of at least one surrounding moving object (in FIG. 5A, the first, third, fourth and fifth surrounding moving objects) located or moving in the local block of the vehicle 500 is called '1-step', obtaining movement information of at least one surrounding moving object (in FIG. 5A, the second and sixth surrounding moving objects) included only in the adjacent first neighboring local block 521 is expanding the local block one time and defined as '2-step'. Furthermore, that the electronic device 1000 obtains movement information of at least one surrounding moving object (in FIG. 5A, the seventh and eighth surrounding moving objects) included only in the second neighboring local block (522) obtained by 2-step expansion is expanding the local block twice, which is '3-step' expansion.

The size of the local block 520 depends on data processing capability of the processor 1300 (see FIG. 2) and a hardware specification such as data packet transmission or reception capability of the communication interface 1500 (see FIG. 2) in the electronic device 1000, and is limited by the hardware specification. For example, the size of the local block 520 may be limited to about 300 meters. In this case, the electronic device 1000 has a limit to obtaining movement information of at least one surrounding moving object that is moving only in an area of 300 meters centered on the location of the vehicle 500.

In the embodiments shown in FIGS. 5A and 5B, the electronic device 1000 may obtain movement information of not only the at least one surrounding moving object included in the local block 520 of the vehicle 500 of the electronic device 1000 but also at least one surrounding moving object included in the neighboring local blocks 521 and 522 by obtaining a local block list of the neighboring local blocks 521 and 522 of adjacent other neighboring surrounding moving objects. Accordingly, the electronic device 1000 of the disclosure is able to perform 2-step expansion on the local block 520 without being limited by the hardware specification, thereby easily obtaining movement information of a remote surrounding moving object, predicting a movement path of the surrounding moving object obtained, and determining a safety way with enhanced reliability.

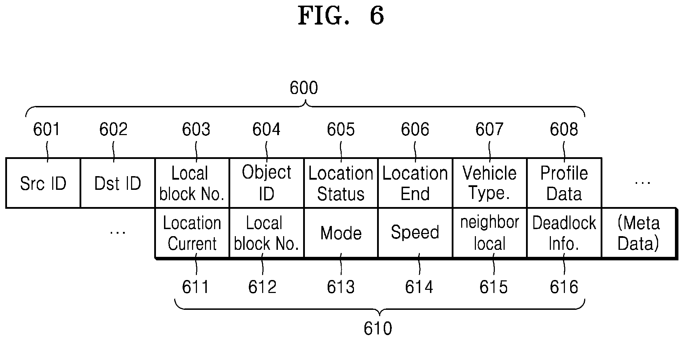

FIG. 6 illustrates an example of data packets 600 and 610 transmitted by the electronic device 1000 to obtain movement information of a moving object included in a neighboring local block of the disclosure.

The data packet 600 shown in FIG. 6 is a packet transmitted first by the electronic device 1000 to a surrounding moving object located or moving in a neighboring local block, and the data packet 610 is a packet transmitted by the electronic device 1000 to the surrounding moving object of the neighboring local block periodically at preset time intervals.

Referring to FIG. 6, the data packet 600 may include a source id (Src ID) 611, a destination id (Dst ID) 612, a local block number 613, object ID 614, a departure point (location start) 615, a destination (location end) 616, a vehicle type 617 and driving profile data 618.

The source id 601 includes identification address information of a communication module or communication device of the electronic device 1000, which transmits the data packet 400. The source id 601 may include, for example, information of one of an IP address, a MAC address or a port number of the electronic device 1000.

The destination id 602 includes identification address information of a target object to receive the data packet 600. In an embodiment, as the data packet 600 is a packet to be transmitted from the electronic device 1000 to the surrounding moving object in the neighboring local block, the destination id 602 may include information of at least one of an IP address, a MAC address or a port number of the surrounding moving object targeted for transmission.

The local block number 603 includes an identification number of an area in a preset range centered on the location of the electronic device 1000. The local block number 603 may be determined in a relative or absolute numbering method. The relative and absolute numbering methods are the same as what are described above in connection with FIG. 4B, so the redundant description will be omitted.

The object id 604 includes identification information of the electronic device 1000.

The departure point 605 includes information about a departure point of the vehicle equipped with the electronic device 1000.

The destination 606 includes information about a destination of the vehicle equipped with the electronic device 1000.

The vehicle type 607 includes information about a type of the vehicle equipped with the electronic device 1000. The type of the vehicle may include, for example, information about a type of one of a sedan, an SUV, a commercial vehicle (e.g., a bus, a truck, etc.), micro mobility, or a two-wheeled vehicle (e.g., a motor bike).

The driving profile data 608 includes accumulated data of movement patterns of the driver who drives the vehicle equipped with the electronic device 1000. The driving profile data 608 may include data about, for example, at least one of a path miss rate, a path compliance rate, an average moving speed and a number of re-routing times.

The data packet 610 transmitted periodically may include information about a current location (Location Current) 611, a local block number (Local block No.) 612, an operation mode (Mode) 613, a moving speed (Speed) 614, a neighboring local block (neighbor local) 615, and deadlock information (Deadlock Info) 616.

The current location 611 includes information about a coordinate value of a current GPS location of the electronic device 1000.

The local block number 612 includes information about a number of the local block in which the vehicle equipped with the electronic device 1000 is located or moving. The number of the local block in which the vehicle is located is given in a relative or absolute manner.

The operation mode 613 includes information relating to an operation of the electronic device 1000. The operation mode 613 may include, for example, a stopped mode (idle), a driving mode (on-trip), and an observer mode (observer) of the surrounding moving object. When the electronic device 1000 operates in the observer mode, the electronic device 1000 may only receive the movement information of the surrounding moving object without providing its movement information to the surrounding moving object.

The moving speed 614 includes information about a moving speed of the vehicle equipped with the electronic device 1000.

The neighboring local block 615 includes information about another local block adjacent to the local block in which the vehicle equipped with the electronic device 1000 is located. In an embodiment, the neighboring local block 615 may include a list of other surrounding moving objects located or moving in the neighboring local block.

The deadlock information 616 includes information about a deadlock state in which driving is not possible along the movement path due to another surrounding moving object and any alternative path may not be selected.

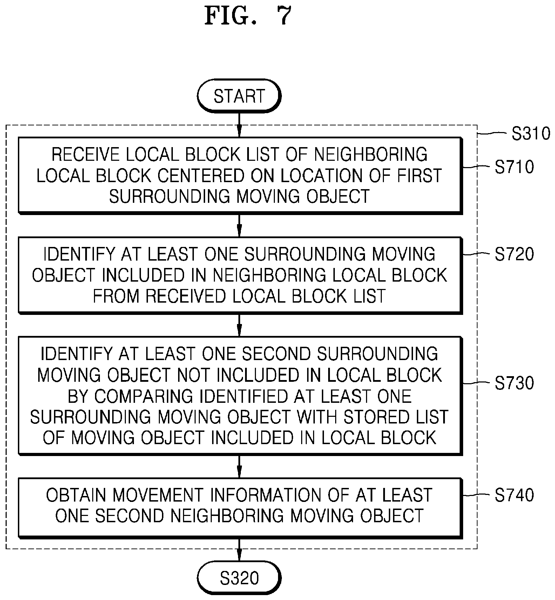

FIG. 7 is a flowchart illustrating a method by which the electronic device 1000 obtains movement information of a moving object included in a neighboring local block by expanding a local block, according to an embodiment of the disclosure.

Operations S710 to S740 shown in FIG. 7 are detailed operations of operation S310 shown in FIG. 3. After operation S740 of FIG. 7 is performed, operation S320 shown in FIG. 3 may be performed.

In operation S710, the electronic device 1000 receives a local block list of a neighboring local block centered on the location of the first surrounding moving object. In an embodiment, the electronic device 1000 may receive, from the first surrounding moving object among at least one surrounding moving object located or moving in the local block of the vehicle, a local block list of a neighboring local block determined as an area of a preset range centered on the first surrounding moving object. In an embodiment, the electronic device 1000 may use D2D communication to receive the local block list of the neighboring local block directly from the communication module or communication device of the first surrounding moving object. It is not, however, limited thereto, and in another embodiment, the electronic device 1000 may receive the local block list of the neighboring local block from the server 2000 (see FIG. 1).

In operation S720, the electronic device 1000 identifies at least one surrounding moving object included in the neighboring local block from the received local block list. The local block list may include a list including IDs of moving objects located or moving in the local block and movement information of each of the moving objects. The electronic device 1000 may identify at least one surrounding moving object included in the local block list based on the received local block list of the neighboring local block.

In operation S730, the electronic device 1000 compares the identified at least one surrounding moving object with the stored list of moving objects included in the local block to identify at least one second surrounding moving object not included in the local block. In an embodiment, the data storage 1200 (see FIG. 2) of the electronic device 1000 may store a list including object IDs and movement information of the moving objects included in the local block of the vehicle. The electronic device 1000 may compare the list stored in the data storage 1200 with the at least one surrounding moving object identified in operation S720 to identify the at least one second surrounding moving object not included in the list but included only in the local block list of the neighboring local block.

In operation S740, the electronic device 1000 obtains movement information of the identified at least one second surrounding moving object.

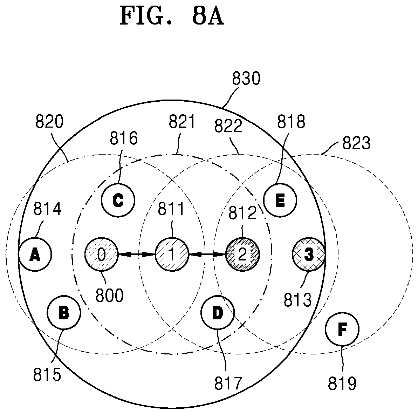

FIG. 8A is a diagram of expanding the size of a local block 820 of the electronic device 1000, according to an embodiment of the disclosure.

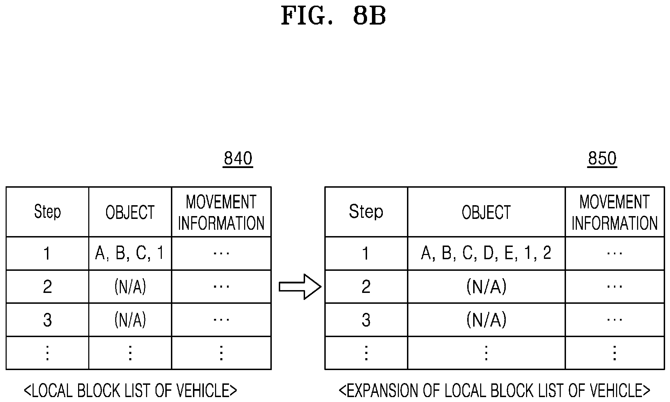

FIG. 8B is a diagram for describing obtaining of movement information of a moving object in a neighboring local block by expanding the size of the local block 820 of the electronic device 1000, according to an embodiment of the disclosure.

Referring to FIG. 8A, in the local block 820, which is an area or space of a preset range centered on the location of the electronic device 1000 mounted on a vehicle 800, a first surrounding moving object 811, a fourth surrounding moving object 814, a fifth surrounding moving object 815 and a sixth surrounding moving object 816 may be located or in motion. Referring to FIG. 8B together, a local block list 840 of the vehicle 800 may include objects such as the first surrounding moving object 811, the fourth surrounding moving object 814, the fifth surrounding moving object 815 and the sixth surrounding moving object 816 and their respective movement information. The electronic device 1000 may store the local block list 840 in the data storage 1200 (see FIG. 2).

A first neighboring local block 821 is determined to be an area or space in a preset range centered on the location of the first surrounding moving object 811. In the first neighboring local block 821, the vehicle 800 equipped with the electronic device 1000, a second surrounding moving object 812, the sixth surrounding moving object 816 and a seventh surrounding moving object 817 may be located or in motion.

A second neighboring local block 822 is determined to be an area or space in a preset range centered on the location of the second surrounding moving object 812. In the second neighboring local block 822, the first surrounding moving object 811, a third surrounding moving object 813, the seventh surrounding moving object 817 and an eighth surrounding moving object 818 may be located or in motion.

A third neighboring local block 823 is determined to be an area or space in a preset range centered on the location of the third surrounding moving object 813. In the third neighboring local block 823, the second surrounding moving object 812, the eighth surrounding moving object 818 and a ninth surrounding moving object 819 may be located or in motion.

The electronic device 1000 may expand the size of the local block 820. In an embodiment, the electronic device 1000 may expand the local block 820 to an expanded local block 830 by increasing communication strength to transmit a data packet through the communication interface 1500 (see FIG. 2). For example, the electronic device 1000 may expand the local block in which to obtain movement information of the surrounding movement information to the expanded local block 830 by transmitting a data packet not only to the first, fourth, fifth and sixth surrounding moving objects 811, 814, 815 and 816 included in the existing local block 820 but also to the second, third, seventh and eighth surrounding moving objects 812, 813, 817 and 818.

The electronic device 1000 may create an expanded local block list 850 (see FIG. 8B) including object IDs and respective movement information of the second, third, seventh and eighth surrounding moving objects 812, 813, 817 and 818 located or moving in the expanded local block 830, and store the expanded local block list 850 in the data storage 1200 (see FIG. 2).

The embodiment shown in FIGS. 8A and 8B is similar to the embodiment shown in FIGS. 5A and 5B in that they obtain movement information of the surrounding moving object included in the neighboring local blocks 821, 822 and 823 in addition to the surrounding moving object included in the local block 820, but differs from the embodiment shown in FIGS. 5A and 5B in that it does not obtain neighboring local block lists from surrounding moving objects included in the neighboring local blocks 821, 822 and 823 and expands the target to receive the data packet to surrounding moving objects located in the neighboring local blocks 821, 822 and 823. To process communication strength to transmit data packets and an increased amount of data packets, performance of the communication interface 1500 (see FIG. 2) and the processor 1300 (see FIG. 2) needs to be improved. In the embodiment shown in FIG. 8A, the size of the expanded local block 830 is determined according to the specification of the communication interface 1500.

FIG. 9 is a diagram illustrating a UI 900 displayed by the electronic device 1000 to represent a safety way and an expected collision point, according to an embodiment of the disclosure.

In an embodiment, the electronic device 1000 may display the UI 900 on at least one of a center information display (CID), a navigation device, a dashboard display, a head-up display (HUD) or a passenger seat display in the vehicle.

Referring to FIG. 9, the UI 900 may include a vehicle UI 910 representing the location of the vehicle, moving object Uls 911, 912 and 913 representing locations of surrounding moving objects located or moving in the local block, safety way Uls 920-1, 920-2 and 920-3 representing safety paths of the vehicle, movement path Uls 931-1, 931-2, 932, 933-1, 933-2 and 933-3 representing movement paths of the surrounding moving objects, and expected collision point Uls 941, 942 and 943.

The vehicle UI 910 and the moving object Uls 911, 912 and 913 may be formed as circular Uls. In an embodiment, diameters of the circles of the moving object Uls 911, 912 and 913 may be determined based on the driving profile data of each of the surrounding moving objects. In an embodiment, the electronic device 1000 may determine the size of the diameter of the circle of the moving object UI 911, 912 or 913 to be proportional to at least one of the path miss rate, the average moving speed and the number of re-routing times included in the driving profile data of the surrounding moving object and inversely proportional to the path compliance rate. Referring to the illustration of FIG. 9, as the first surrounding moving object has a low path miss rate, a high pass compliance rate and a low number of re-routing times, the electronic device 1000 may display the size of the diameter of the first moving object UI 911 to be small. In another example, as the third surrounding moving object moves here and there without moving to a set destination and drives in a zigzag form without moving along the movement path, the path miss rate is high, the path compliance path is low, and the number of re-routing times is high because there are four times of change in movement path. Accordingly, the electronic device 1000 may display the size of the diameter of the circle of the third moving object UI 913 to be larger than those of the first and second moving objects 911 and 912.

The electronic device 1000 may display the safety way Uls 920-1, 920-2 and 920-3 in a different color for each section. In an embodiment, the electronic device 1000 may display each section of the safety way Uls 920-1, 920-2 and 920-3 in different color based on a degree of risk determined according to at least one of a location of the surrounding moving object, whether to pass through a stopover, moving speed and an expected collision point of the surrounding moving object. For example, a safe section may be displayed in blue, a section requiring care in yellow, and a dangerous section in red. In the embodiment of FIG. 9, the first path 920-1 and the third path 920-3 of the safety way Uls 920-1, 920-2 and 920-3 may be displayed in blue because they do not overlap a movement path of a surrounding moving object and there is no approaching surrounding moving object. The second path 920-2 of the safety way Uls 920-1, 920-2 and 920-3 may be displayed in red because it overlaps the movement path of the first surrounding moving object and the first surrounding moving object is expected to come closer and have a collision.

Similar to the safety way Uls 920-1, 920-2 and 920-3, the electronic device 1000 may also display the movement path Ills 931-1, 931-2, 932, 933-1, 933-2 and 933-3 in different color for each section based on the degree of risk. In an embodiment, the electronic device 1000 may determine a degree of risk according to the possibility of having a collision with a vehicle or other surrounding moving object, and determine colors of the movement path Uls 931-1, 931-2, 932, 933-1 and 933-3 based on the determined degree of risk. In an embodiment shown in FIG. 9, as path 1-1 931-1 and path 1-2 931-2 representing the movement path of the first surrounding moving object may overlap the safety way of the vehicle and have the possibility of a collision with the vehicle, it may be displayed in yellow. The second path 932 representing a movement path of the second surrounding moving object overlaps the movement path of the first surrounding moving object and is expected to have a collision with the first surrounding moving object, so that it may be displayed in yellow. Path 3-1 933-1, path 3-2 933-2 and path 3-3 933-3 representing the movement path of the third surrounding moving object have a zigzag form, which is not linear, and are expected to have a collision with the first surrounding moving object, so that they may be displayed in orange color.

The colors of the safety way Uls 920-1, 920-2 and 920-3 and the movement path Uls 931-1, 931-2, 932, 933-1, 933-2 and 933-3 of the surrounding moving objects are merely examples and not limited thereto as described in FIG. 9.

The electronic device 1000 may predict an expected collision point based on the safety way and the movement path, and display the expected collision point Uls 941, 942 and 943. In the embodiment shown in FIG. 9, the first expected collision point UI 941 represents a point where the movement path of the first surrounding moving object overlaps the safety way of the vehicle and at which a collision is expected. Furthermore, the second expected collision point UI 942 represents a point where the movement path of the second surrounding moving object overlaps the movement path of the first surrounding moving object and at which a collision between the first surrounding moving object and the second surrounding moving object is expected, and the third expected collision point UI 943 represents a point where the movement path of the third surrounding moving object overlaps the movement path of the first surrounding moving object and at which a collision between the first surrounding moving object and the third surrounding moving object is expected.

In an embodiment, the electronic device 1000 may output a warning notification when recognizing a surrounding moving object approaching the expected collision point or when the movement path of the surrounding moving object overlaps the safety way of the vehicle. In an embodiment, the electronic device 1000 may output a UI notification such as a warning message on the display 1610. It is not, however, limited thereto, and the electronic device 1000 may output a voice warning message or warning sound through the speaker 1620 (see FIG. 2) or provide a warning notification through vibration on the steering wheel through the vibration device 1630.

The electronic device 1000 may control intervals or the number of times of outputting the warning notification based on the diameter of the circle of the moving object UI 911, 912 or 913 determined based on the driving profile data of the surrounding moving object. In an embodiment, the electronic device 1000 may make the output intervals of the warning notification short or increase the number of output times in proportion to the size of the diameter of the moving object UI 911, 912 or 913. For example, as the third moving object UI 913 determined by reflecting the driving profile data of the third surrounding moving object has a circle with a diameter larger than the first moving object UI 911 and the second moving object UI 912, the electronic device 1000 may make the output intervals of the warning notification short and increase the number of output times when the third surrounding moving object is approaching or located on the safety way.

In the embodiment shown in FIG. 9, the electronic device 1000 may prevent sudden accidents and reduce risk of accidents by displaying the UI 900 representing the location of the surrounding moving object, the safety way, the movement path of the surrounding moving object and the expected collision point. Especially, the electronic device 1000 according to an embodiment of the disclosure may allow the driver to intuitively determine a degree of risk of each section of the safety way by displaying the safety way and the movement path in different colors according to a degree of risk due to a surrounding moving object.

FIG. 10 is a diagram illustrating an alternative path Ul 1050 displayed by the electronic device 1000, according to an embodiment of the disclosure.

Referring to FIG. 10, the electronic device 1000 may display a vehicle Ul 1010, moving object Uls 1011, 1012 and 1013, safety way Uls 1020-1, 1020-2 and 1020-3, a movement path UI 1030, an expected collision point UI 1040, and an alternative path UI 1050. In an embodiment, the electronic device 1000 may display the UIs on at least one of a CID, a navigation device, a dashboard display, an HUD or a passenger seat display in the vehicle.

The vehicle UI 1010 represents a location of the vehicle, and the first moving object UI 1011 represents a location of the first surrounding moving object. In the embodiment shown in FIG. 10, the first path 1020-1 of the vehicle may overlap the movement path UI 1030 of the first surrounding moving object, and at the overlapping point, the expected collision point UI 1040 may be displayed. The electronic device 1000 may display the alternative path UI 1050 that represents a detour path to avoid the first surrounding moving object moving toward the expected collision point. The alternative path UI 1050 represents a path to detour around the second path 1020-2 having a high degree of risk in the safety way.

In the embodiment shown in FIG. 10, the electronic device 1000 may prevent accidents by recognizing the first surrounding moving object approaching the safety way, predicting an expected collision point, and displaying the expected collision point UI 1040 that represents an expected collision point and the alternative path UI 1050 that represents an alternative path to avoid and detour around the expected collision point.

FIG. 11 is a block diagram illustrating configurations of the electronic device 1000 and the vehicle 100, according to an embodiment of the disclosure.

Referring to FIG. 11, the electronic device 1000 may include the processor 1300 and a control signal transceiver 1700. The processor 1300 may generate an emergency brake signal to stop driving of the vehicle in a situation where a collision with a surrounding moving object is expected but any alternative path may not be provided. For example, the processor 1300 may generate an emergency brake signal when a surrounding moving object approaching the safety way is recognized and the detour path to be suggested as an alternative path overlaps another surrounding moving object. The emergency brake signal is a signal to control the vehicle to be stopped for a few seconds or tens of seconds. The processor 1300 may provide the emergency brake signal to the control signal transceiver 1700.

The control signal transceiver 1700 is configured to perform data communication between the electronic device 1000 and the respective systems in the vehicle 100. In an embodiment, the control signal transceiver 1700 may communicate with the system in the vehicle 100 over a controller area network (CAN). The control signal transceiver 1700 may transmit the emergency brake signal to a power system 102 and a brake system 104.

The vehicle 100 may include the power system 102 and the brake system 104. On receiving the emergency brake signal, the power system 102 and the brake system 104 may urgently stop driving of the vehicle.

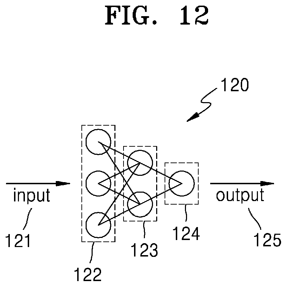

FIG. 12 is a diagram for describing an operation performed by the electronic device 1000 using an artificial intelligence (Al) technology, according to an embodiment of the disclosure.

Specifically, at least one of operations performed by the electronic device 1000 of i) obtaining movement information including at least one of a departure point, a destination, a stopover, a current location, a moving speed, a vehicle type and driving profile data of at least one surrounding moving object around the vehicle, ii) predicting a movement path of the at least one surrounding moving object based on the movement information obtained, iii) determining a safety way of the vehicle based on the movement path of the at least one surrounding moving object and at least one of a departure point, a destination and a stopover of the vehicle, iv) predicting an expected collision point due to a surrounding moving object located on or approaching the safety way based on the movement path of the at least one surrounding moving object and the safety way of the vehicle, and v) displaying a UI representing the safety way and the expected collision point may be performed by using an Al technology that performs operations through a neural network.

The Al technology is a technology to obtain a desired result by performing processes such as analysis and/or classification on input data based on operations through the neural network.

The Al technology may be implemented by using an algorithm. The algorithm or a set of algorithms to implement the Al technology is called the neural network. The neural network may receive input data, perform an operation for the analysis and/or classification, and output result data. In order for the neural network to output accurate result data corresponding to the input data, the neural network needs to be trained. The training may refer to training the neural network to discover or learn by itself a method of analyzing input data to the neural network, a method of classifying the input data and/or a method of extracting features required to generate result data from the input data. Specifically, through the training procedure, the neural network may be trained with training data (e.g., a plurality of different images) to optimize weight values in the neural network. A desired result is output by processing the input data through the neural network having the optimized weight values.

When there are a plurality of hidden layers in the neural network, which perform operations, i.e., when the depth of the neural network for performing the operations increases, the neural network may be classified as a deep neural network (DNN). The neural network may include, for example, a convolutional neural network (CNN), a DNN, a recurrent neural network (RNN), a restricted Boltzmann machine (RBM), a deep belief network (DBN), a bidirectional recurrent deep neural network (BRDNN), and a deep Q-network, without being limited thereto. The neural network may also be subdivided. For example, the CNN neural network may be subdivided into a deep convolution neural network (DCNN) or a Capsnet neural network (not shown).

An Al model may referto a neural network including at least one layer that operates to receive input data and output a desired result. Furthermore, the AI model may refer to an algorithm, a set of a plurality of algorithms, a processor for executing the algorithm (or the set of algorithms), software for executing the algorithm (or the set of algorithms) or hardware for executing the algorithm (or the set of algorithms) that performs an operation through the neural network to output a desired result.

At least one of the aforementioned operations of i) obtaining movement information including at least one of a departure point, a destination, a stopover, a current location, a moving speed, a vehicle type and driving profile data of at least one surrounding moving object around the vehicle, ii) predicting a movement path of the at least one surrounding moving object based on the movement information obtained, iii) determining a safety way of the vehicle based on the movement path of the at least one surrounding moving object and at least one of a departure point, a destination and a stopover of the vehicle, iv) predicting an expected collision point due to a surrounding moving object located on or approaching the safety way based on the movement path of the at least one surrounding moving object and the safety way of the vehicle, and v) displaying a UI representing the safety way and the expected collision point may be performed on a AI model basis.

Referring to FIG. 12, the neural network 120 may be trained by receiving training data. The trained neural network 120 may receive input data 121 through an input end 122, and the input end 122, a hidden layer 123 and an output end 124 may analyze the input data 121 and data received from a previous layer and perform an operation to output output data 125. Although there is one hidden layer 123 shown in FIG. 12, it is merely an example and the hidden layer 123 may be comprised of a plurality of layers.

In an embodiment of the disclosure, the neural network 120 may learn movement patterns of the driver who drives a surrounding moving object based on at least one of a path miss rate, a path compliance rate, an average moving speed and the number of re-routing times in the movement information of the at least one surrounding moving object.

In an embodiment of the disclosure, the neural network 120 may be trained to recognize a dangerous object having at least one of the path miss rate, the path compliance rate, the average moving speed and the number of re-routing times exceeding a preset threshold among the at least one surrounding moving object.

In an embodiment of the disclosure, the neural network 120 may be trained to output a warning notification through an output device 1600 (see FIG. 2) of the electronic device when a surrounding moving object approaching the expected collision point is recognized or when a movement path of at least one surrounding moving object overlaps the safety way of the vehicle.

In an embodiment of the closure, the neural network 120 may be trained to transmit an emergency brake control signal to the driving system of the vehicle to stop driving of the vehicle when a collision with the at least one surrounding moving object is expected.

In an embodiment of the disclosure, data or program codes related to the neural network 120 that performs at least one of the aforementioned operations of i) obtaining movement information including at least one of a departure point, a destination, a stopover, a current location, a moving speed, a vehicle type and driving profile data of at least one surrounding moving object around the vehicle, ii) predicting a movement path of the at least one surrounding moving object based on the movement information obtained, iii) determining a safety way of the vehicle based on the movement path of the at least one surrounding moving object and at least one of a departure point, a destination and a stopover of the vehicle, iv) predicting an expected collision point due to a surrounding moving object located on or approaching the safety way based on the movement path of the at least one surrounding moving object and the safety way of the vehicle, and v) displaying a UI representing the safety way and the expected collision point may be stored in the memory 1400 (see FIG. 2), and training with the neural network 120 may be performed by the processor 1300 (see FIG. 2).

Alternatively, the neural network 120 that performs at least one of the aforementioned operations of i) obtaining movement information including at least one of a departure point, a destination, a stopover, a current location, a moving speed, a vehicle type and driving profile data of at least one surrounding moving object around the vehicle, ii) predicting a movement path of the at least one surrounding moving object based on the movement information obtained, iii) determining a safety way of the vehicle based on the movement path of the at least one surrounding moving object and at least one of a departure point, a destination and a stopover of the vehicle, iv) predicting an expected collision point due to a surrounding moving object located on or approaching the safety way based on the movement path of the at least one surrounding moving object and the safety way of the vehicle, and v) displaying a UI representing the safety way and the expected collision point may be implemented in an extra device (not shown) or processor (not shown) separated from the electronic device 1000.

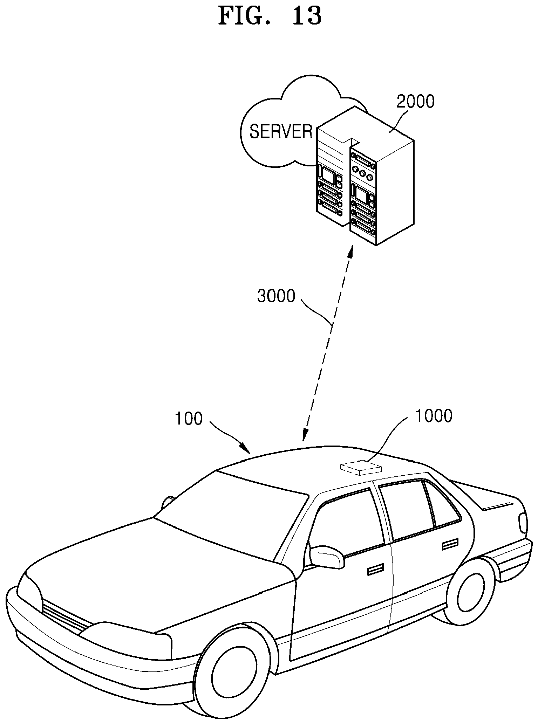

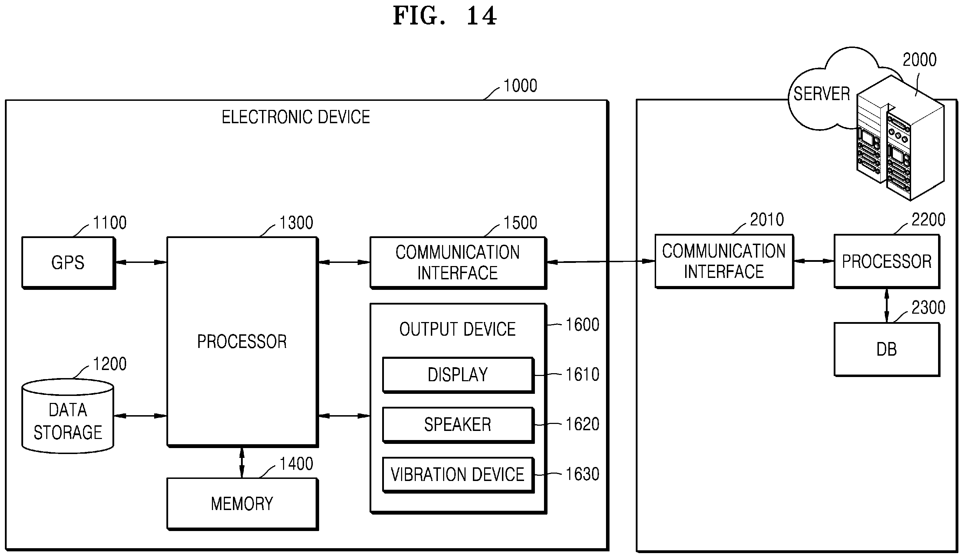

The aforementioned operations through the neural network 120 may be performed by the server 2000 (see FIGS. 1, 13 and 14) that may communicate with the electronic device 1000 over a wireless communication network. The communication between the electronic device 1000 and the server 2000 will be described in connection with FIGS. 13 and 14.

FIG. 13 illustrates the electronic device 1000 that operates by working with the server 2000, according to an embodiment of the disclosure.

The server 2000 may transmit or receive data to or from the electronic device 1000 over a communication network and process the data.

Referring to FIG. 14 together, the server 2000 may include a communication interface 2100 for communicating with the electronic device 1000, a processor 2200 for performing at least one instruction, and a database 2300.

The server 2000 may train an AI model and store the trained Al model. The server 2000 may use the trained AI model to perform at least one of the aforementioned operations of i) obtaining movement information including at least one of a departure point, a destination, a stopover, a current location, a moving speed, a vehicle type and driving profile data of at least one surrounding moving object around the vehicle, ii) predicting a movement path of the at least one surrounding moving object based on the movement information obtained, iii) determining a safety way of the vehicle based on the movement path of the at least one surrounding moving object and at least one of a departure point, a destination and a stopover of the vehicle, iv) predicting an expected collision point due to a surrounding moving object located on or approaching the safety way based on the movement path of the at least one surrounding moving object and the safety way of the vehicle, and v) displaying a UI representing the safety way and the expected collision point.

In general, the electronic device 1000 has limitations on memory storage capacity, operation processing speed, capability to collect a training data set, etc., as compared to the server 2000. Hence, an operation requiring storage of massive data and a large amount of operation may be performed by the server 2000, which may then transmit required data and/or an AI model to the electronic device 1000 through a communication network. Hence, the electronic device 1000 is able to perform a required operation quickly and easily by receiving, through the server 2000, and using the required data and/or Al model, without having a large-capacity memory and a processor having high-speed calculation capability.

In an embodiment of the disclosure, the server 2000 may include the neural network 120 as described above in FIG. 12.

FIG. 14 is a diagram for describing FIG. 13 in detail.

Referring to FIG. 14, the server 2000 may include a communication interface 2100, a processor 2200, and a database 2300.

The communication interface 2100 communicates with an external device (e.g., a server) through a wireless communication network 3000 (see FIG. 13). The external device (not shown) may perform at least one of operations required by the electronic device 1000 or include a server for transmitting data required by the electronic device 1000.

The communication interface 2100 includes at least one communication module such as a short-range communication module, a wired communication module, a mobile communication module, a broadcast receiving module, etc. The at least one communication module refers to a communication module that may perform data transmission and reception over a network that conforms to a communication protocol such as a communication scheme using a tuner for performing broadcast reception, bluetooth, wireless LAN (Wi-Fi), Wibro, Wimax, code division multiple access (CDMA), wideband CDMA (WCDMA), Internet, 3G, 4G, 5G and/or 5G millimeter waves (mmWave).

For example, when using the 5G mmWave, the communication interface 2100 may quickly transmit or receive a large amount of data. Specifically, the vehicle may provide increased safety of the vehicle and/or user convenience by using mmWave to quickly receive the large amount of data and quickly provide data required for safety of the vehicle 100 (e.g., data required for autonomous driving, data required for a navigation service, etc.), user consumable content (e.g., movie, music, etc.).

A mobile communication module included in the communication interface 2100 may communicate with another device (e.g., the server 2000) remotely located through a communication network that conforms to a communication protocol such as 3G, 4G and/or 5G. The communication module to communicate with another device remotely located may be referred to as a remote communication module.

In an embodiment, the communication interface 2100 may receive driving profile data, which is information about a movement pattern, from a communication device included in a surrounding moving object around the vehicle and/or the electronic device 1000. The driving profile data is accumulated data about a movement pattern of an individual driver who drives the vehicle or a surrounding moving object, and may include, for example, data about at least one of path miss rate, path compliance rate, stop frequency during the movement path guide, average moving speed, the number of re-routing times or the number of times of deadlock entrance. It is not, however, limited thereto, and may further include, for example, at least one of an accident occurrence area under particular weather, time and season, the number of accident occurrences for each vehicle type and a dangerous object list.

The processor 2200 controls general operation of the server 2000. For example, the processor 2200 may perform required operations by executing at least one of at least one instructions and programs of the server 2000.

In an embodiment, the processor 2200 may determine a safety way of the vehicle based on the received driving profile data and transmit information about the safety way to the electronic device 1000. In an embodiment, the processor 2200 may analyze the driving profile data to recognize at least one of an accident occurrence area under the particular weather, time, or season, the number of accident occurrences for each vehicle type, and a dangerous object, determine a safety way based on the recognition result, and transmit information about the safety way to the electronic device 1000.

The database 2300 may include a memory (not shown), which may store at least one of at least one instruction, a program, or data required by the server 2000 to perform a certain operation. Furthermore, the database 2300 may store data required by the server 2000 to perform a neural network based operation.

In an embodiment of the disclosure, the server 2000 may store the neural network 120 as described above in FIG. 12. The neural network 120 may be stored in at least one of the processor 2200 and the database 2300. The neural network 120 included by the server 2000 may be a neural network that completes learning.

Furthermore, the server 2000 may transmit the neural network that completes learning to the communication interface 1500 of the electronic device 1000 through the communication interface 2100. The electronic device 1000 may then obtain and store the neural network that completes learning, and obtain desired output data through the neural network.

The program executed by the electronic device 1000 as described in the disclosure may be implemented in hardware, software, and/or a combination thereof. The program may be performed by any system capable of performing computer-readable instructions.

The software may include a computer program, codes, instructions, or one or more combinations of them, and may configure a processing device to operate as desired or instruct the processing device independently or collectively.

The software may be implemented with a computer program including instructions stored in a computer-readable recording (or storage) medium. Examples of the computer-readable recording medium include a magnetic storage medium (e.g., a read only memory (ROM), a floppy disk, a hard disk, etc.), and an optical recording medium (e.g., a compact disc ROM (CD-ROM), or a digital versatile disc (DVD)). The computer-readable recording medium may also be distributed over network coupled computer systems so that the computer-readable code is stored and executed in a distributed fashion. This media may be read by the computer, stored in the memory, and executed by the processor.

The computer-readable storage medium may be provided in the form of a non-transitory storage medium. The term 'non-transitory' only means that the storage medium is tangible without including a signal, but does not help distinguish any data stored semi-permanently or temporarily in the storage medium. For example, the non-transitory storage medium may include a buffer that temporarily stores data.

Furthermore, the program according to the embodiments of the disclosure may be provided in a computer program product. The computer program product may be a commercial product that may be traded between a seller and a buyer.

The computer program product may include a software program and a computer-readable storage medium having the software program stored thereon. For example, the computer program product may include a product (e.g., a downloadable application) in the form of a software program that is electronically distributed by the manufacturer of the electronic device 1000 or by an electronic market (e.g., Google play store^{®}, or App store^{®}). For the electronic distribution, at least a portion of the software program may be stored in a storage medium or arbitrarily created. In this case, the storage medium may be a storage medium of a server of the manufacturer of the vehicle or the electronic device 1000, a server of the electronic market, or a relay server that temporarily stores the software program.

The computer program product may include the storage medium of the server 2000 or a storage medium of another electronic device in a system comprised of the electronic device 1000, the server 2000 (see FIGS. 13 and 14) and the other electronic device. Alternatively, when there is a third device (e.g., a smart phone) communicatively connected to the electronic device 1000, the computer program product may include a storage medium of the third device. In another example, the computer program product may be transmitted from the electronic device 1000 to the third device, or may include a software program itself that is transmitted from the third device to the electronic device 1000.

In this case, one of the electronic device 1000 and the third device may execute the computer program product to perform the method according to the embodiments of the disclosure. Alternatively, at least one of the electronic device 1000 and the third device may execute the computer program product to perform the method according to the embodiments of the disclosure in a distributed fashion.

For example, the electronic device 1000 may execute the computer program product stored in the memory 1400 (see FIG.2) to control another electronic device communicatively connected to the electronic device 1000 to perform the method according to the embodiments of the disclosure.

In another example, the third device may execute the computer program product to control the electronic device communicatively connected to the third device to perform the method according to the embodiments of the disclosure.

In the case that the third device executes the computer program product, the third device may download the computer program product from the electronic device 1000 and execute the downloaded computer program product. Alternatively, the third device may execute the computer program product that is preloaded to perform the method according to the embodiments of the disclosure.

Although the disclosure is described with reference to some embodiments as described above and accompanying drawings, it will be apparent to those of ordinary skill in the art that various modifications and changes can be made to the embodiments. For example, the aforementioned method may be performed in a different order, and/or the aforementioned components such as a computer system or a module may be combined in a different form from what is described above, and/or replaced or substituted by other components or equivalents thereof, to obtain appropriate results.

## Claims

1. An electronic device mounted on a vehicle, the electronic device comprising:
a display;
a communication interface configured to perform data communication with a server or at least one surrounding moving object located or moving in a vicinity of the vehicle;
a memory storing at least one program; and
a processor configured to execute the at least one program,
wherein the processor is configured to
control the communication interface to obtain movement information including at least one of a departure point, a destination, a stopover, a current location, a moving speed, a vehicle type and driving profile data of the at least one surrounding moving object,
predict a movement path of the at least one surrounding moving object based on the movement information obtained, determine a safety way of the vehicle based on the movement path of the at least one surrounding moving object and at least one of a departure point, a destination and a stopover of the vehicle, predict an expected collision point due to a surrounding moving object located on or approaching the safety way based on the movement path of the at least one surrounding moving object and the safety way of the vehicle, and
display a user interface (UI) representing the safety way and the expected collision point on the display.

2. The electronic device of claim 1, wherein the processor is configured to control the communication interface to receive a data packet including the movement information from the at least one moving object located in a local block within a preset range centered on a location of the vehicle.

3. The electronic device of claim 2, wherein the processor is configured to
receive, through the communication interface from a first surrounding moving object located in the local block, a list of surrounding moving objects included in a neighboring local block determined to be an area of a preset range centered on the first surrounding moving object,
identify at least one second surrounding moving object not included in the local block by comparing the received list with at least one moving object included in the local block, and obtain movement information about the identified at least one second surrounding moving object.

4. The electronic device of claim 1, wherein the driving profile data comprises movement pattern information about at least one of a path miss rate, a path compliance rate, an average moving speed, and a number of re-routing times of a driver who drives the at least one surrounding moving object.

5. The electronic device of claim 4, wherein the processor is configured to display a safety circle UI on the display, which represents the at least one surrounding moving object in the shape of a circle having a diameter proportional to at least one value of the path miss rate, the average moving speed and the number of re-routing times and inversely proportional to the path compliance rate.

6. The electronic device of claim 1, wherein the processor is configured to control the display to output a warning notification UI when a surrounding moving object approaching the expected collision point is recognized or a movement path of the at least one surrounding moving object overlaps the safety way of the vehicle.

7. The electronic device of claim 6, wherein the processor is configured to
recognize a surrounding moving object having at least one of the path miss rate, the path compliance rate, the average moving speed and the number of re-routing times exceeding a preset threshold among the at least one surrounding moving object, and determine the recognized surrounding moving object as a dangerous object, and
control intervals and a number of times of outputting the warning notification when the dangerous object approaches the expected collision point or is located on the safety way of the vehicle.

8. The electronic device of claim 1, wherein the processor is configured to display an alternative path avoiding and detouring around the expected collision point on the display when a collision is expected as the at least one surrounding moving object approaches the vehicle or the vehicle drives to the expected collision point.

9. A method of operating an electronic device mounted on a vehicle, the method comprising:
obtaining movement information including at least one of a departure point, a destination, a stopover, a current location, a moving speed, a vehicle type and driving profile data of at least one surrounding moving object in a vicinity of the vehicle;
predicting a movement path of the at least one surrounding moving object based on the movement information obtained;
determining a safety way of the vehicle based on the movement path of the at least one surrounding moving object and at least one of a departure point, a destination and a stopover of the vehicle;
predicting an expected collision point due to a surrounding moving object located on or approaching the safety way based on the movement path of the at least one surrounding moving object and the safety way of the vehicle; and
displaying a user interface (Ul) representing the safety way and the expected collision point.

10. The method of claim 9, wherein the obtaining of the movement information of the at least one moving object comprises receiving a data packet including the movement information from the at least one moving object located in a local block within a preset range centered on a location of the vehicle.

11. The method of claim 10, wherein the obtaining of the movement information of the at least one moving object comprises
receiving, from a first surrounding moving object located in the local block, a list of surrounding moving objects included in a neighboring local block determined to be an area of a preset range centered on the first surrounding moving object;
identifying at least one second surrounding moving object not included in the local block by comparing the received list with at least one moving object included in the local block; and
obtaining movement information about the identified at least one second surrounding moving object.

12. The method of claim 9, wherein the driving profile data comprises movement pattern information about at least one of a path miss rate, a path compliance rate, an average moving speed, and a number of re-routing times of a driver who drives the at least one surrounding moving object.

13. The method of claim 9, further comprising outputting a warning notification when a surrounding moving object approaching the expected collision point is recognized or a movement path of the at least one surrounding moving object overlaps the safety way of the vehicle.

14. The method of claim 9, further comprising displaying an alternative path avoiding and detouring around the expected collision point when a collision is expected as the at least one surrounding moving object approaches the vehicle or the vehicle drives to the expected collision.

15. A computer program product including a computer-readable storage medium,
wherein the storage medium has stored therein instructions executed by an electronic device mounted on a vehicle to perform operations of:
obtaining movement information including at least one of a departure point, a destination, a stopover, a current location, a moving speed, a vehicle type and driving profile data of at least one surrounding moving object around the vehicle;
predicting a movement path of the at least one surrounding moving object based on the movement information obtained;
determining a safety way of the vehicle based on the movement path of the at least one surrounding moving object and at least one of a departure point, a destination and a stopover of the vehicle;
predicting an expected collision point due to a surrounding moving object located on or approaching the safety way based on the movement path of the at least one surrounding moving object and the safety way of the vehicle; and
displaying a user interface (Ul) representing the safety way and the expected collision point.
